# EUROPÄISCHE PATENTSCHRIFT

(11) **EP 3 580 482 B1**
(45) Veröffentlichungstag und Bekanntmachung des Hinweises auf die Patenterteilung: **06.01.2021**
(21) Anmeldenummer: 18702123.3
(22) Anmeldetag: 16.01.2018
(51) Int. Cl.: F04D 29/12, F01D 11/00, F16J 15/34

(54) **GLEITRINGDICHTUNGSANORDNUNG MIT SICHERHEITSDICHTUNG**
SLIDING RING SEAL ARRANGEMENT HAVING SAFETY SEAL
SYSTÈME D'ÉTANCHÉITÉ À BAGUES DE GLISSEMENT DOTÉ D'UN JOINT D'ÉTANCHÉITÉ

(30) Priorität: 09.02.2017 DE 102017202038
(43) Veröffentlichungstag der Anmeldung: 18.12.2019
(73) Patentinhaber: EagleBurgmann Germany GmbH & Co. KG, 82515 Wolfratshausen (DE)
(72) Erfinder: WERDECKER, Ferdinand, 82432 Walchensee (DE); BAUER, Florian, 83646 Oberfischbach (DE); RANKL, Stephan, 82205 Gilching (DE); HELLMIG, Benjamin, 81543 München (DE); KNEISSL, Klaus, 83623 Dietramszell (DE)
(74) Vertreter: Hoefer & Partner Patentanwälte mbB
(86) Internationale Anmeldenummer: PCT/EP2018/050919
(87) Internationale Veröffentlichungsnummer: WO 2018/145861

(56) Entgegenhaltungen:
- DE-C1- 4 225 642
- DE-U1- 29 818 576
- DE-U1-202008 003 418

## Beschreibung

Die vorliegende Erfindung betrifft eine Gleitringdichtungsanordnung mit einer Gleitringdichtung und einer Sicherheitsdichtung als Reservedichtung für die Gleitringdichtung. Die Sicherheitsdichtung ist dabei nicht als Gleitringdichtung ausgebildet.

Gleitringdichtungen sind aus dem Stand der Technik in unterschiedlichen Ausgestaltungen bekannt. Hierbei können verschiedenste Dichtungsaufgaben mittels Gleitringdichtungen gelöst werden, insbesondere auch toxische Medien oder Medien mit sehr hohen Drücken und/oder sehr hohen Temperaturen abgedichtet werden. Insbesondere zum Schutz der Umwelt sollten hierbei bei gefährlichen Anwendungsfällen Sicherheitseinrichtungen vorgesehen werden. Hierbei ist es bekannt, beispielsweise zwei Gleitringdichtungen in Reihe zwischen einer Produktseite und einer Atmosphärenseite anzuordnen. Bei Ausfall der ersten Gleitringdichtung dient somit die zweite Gleitringdichtung als Sicherheitsdichtung, welche verhindert, dass das Produkt in die Umwelt gelangt (vgl. z.B. DE 20 2008 003 418 U1). Die zweite Gleitringdichtung kann dabei gleich wie die erste Gleitringdichtung ausgebildet sein oder auch unterschiedlich. Diese Möglichkeit der Absicherung ist dabei sehr sicher, hat jedoch den Nachteil hoher Kosten, da Gleitringdichtungen sehr teuer in der Herstellung sind.

Es ist daher Aufgabe der vorliegenden Erfindung, eine Gleitringdichtungsanordnung mit einer Gleitringdichtung bereitzustellen, welche eine Absicherung im Falle eines Schadens der Gleitringdichtung aufweist, um eine Verschmutzung der Umgebung mit dem abzudichtenden Medium zu vermeiden, wobei die Sicherheitsdichtung keine Gleitringdichtung ist. Diese Aufgabe wird durch eine Gleitringdichtungsanordnung mit den Merkmalen des Anspruchs 1 gelöst, die Unteransprüche zeigen bevorzugte Weiterbildungen der Erfindung.

Die erfindungsgemäße Gleitringdichtungsanordnung mit den Merkmalen des Anspruchs 1 weist demgegenüber den Vorteil auf, dass eine Gleitringdichtungsanordnung bereitgestellt werden kann, welche eine kostengünstige Sicherheitsdichtung zur Absicherung einer Gleitringdichtung ermöglicht. Als Sicherheitsdichtung muss dabei keine zweite Gleitringdichtung verwendet werden, sondern die Sicherheitsdichtung ist eine einstückige Dichtung, welche als Reservedichtung bei einem Ausfall der Gleitringdichtung vorgesehen ist.

Die Sicherheitsdichtung weist einen Grundkörper und einen einstückig mit dem Grundkörper verbundenen Dichtbereich auf, welcher in Axialrichtung vom Grundkörper weg verläuft. Der Dichtbereich ist dabei flexibel ausgebildet. Ferner weist die Sicherheitsdichtung an einem inneren Umfang eine Dichtfläche auf, welche für einen dichtenden Kontakt mit einem rotierenden Bauteil eingerichtet ist. Die Sicherheitsdichtung ist dabei stationär angeordnet. Somit kann durch eine relativ kostengünstige einstückige Sicherheitsdichtung eine Absicherung der Gleitringdichtung ermöglicht werden, ohne dass eine zweite Gleitringdichtung als Sicherheitsdichtung notwendig ist. Somit kann bei einem Ausfall der Gleitringdichtung, beispielsweise bei einer Beschädigung oder dgl., die Sicherheitsdichtung eine Abdichtung am rotierenden Bauteil gegenüber der Atmosphäre bereitstellen. Die Abdichtung kann dabei sehr schnell bereitgestellt werden, wobei insbesondere ein Überdruck des abzudichtenden Mediums unterstützend wirkt. Weiterhin stellt die Sicherheitsdichtung sicher, dass im Normalbetrieb keine große zusätzliche Reibung zwischen dem rotierenden und dem stationären Bauteil einer Anlage auftritt. Dadurch werden zusätzliche Verluste durch die Sicherheitsdichtung im normalen Betrieb minimiert.

Bevorzugt ist eine Dicke des Dichtbereichs in Radialrichtung kleiner als eine Dicke des Grundkörpers in Radialrichtung.

Vorzugsweise sind der Grundkörper und der Dichtbereich der Sicherheitsdichtung einstückig aus dem gleichen Material hergestellt. Hierdurch können insbesondere die Herstellungskosten sehr klein gehalten werden. Besonders bevorzugt weist das Material des Sicherheitsrings dabei eine Faserverstärkung auf. Weiter bevorzugt ist das Grundmaterial für die Sicherheitsdichtung ein thermoplastisches Polymer, vorzugsweise faserverstärkt.

Gemäß einer weiteren bevorzugten Ausgestaltung der vorliegenden Erfindung ist ein Übergang an eine Außenseite der Sicherheitsdichtung zwischen dem Grundkörper und dem schmalen Dichtbereich bogenförmig ausgeführt. Durch einen bogenförmigen Übergang wird der Übergang kantenfrei ausgestaltet, so dass eine Gefahr von Rissen, welche bei einem kantenförmigen Übergang auftreten könnten, minimiert ist.

Weiter bevorzugt steht der schmale Dichtbereich vom Grundkörper in Richtung zur Gleitringdichtung vom Grundkörper vor. Hierdurch kann ein besonders kompakter Aufbau der Gleitringdichtungsanordnung realisiert werden.

Gemäß einer weiteren bevorzugten Ausgestaltung der vorliegenden Erfindung weist der Dichtbereich der Sicherheitsdichtung eine Fläche ohne vorstehende Bereiche, wie Lippen der dgl., auf.

Gemäß einer alternativen Ausgestaltung der Erfindung sind am Dichtbereich der Sicherheitsdichtung eine Vielzahl von in Umfangsrichtung verlaufenden, von der Dichtfläche vorstehende Lippen angeordnet. Die Lippen stehen von der Dichtfläche vorzugsweise radial ab. Besonders bevorzugt kontaktieren die Lippen dabei ein rotierendes Bauteil, wie beispielsweise eine Welle oder eine Wellenhülse oder dgl. Durch diesen Kontakt wird im normalen Betrieb sichergestellt, dass eine möglichst geringe Reibung an der Sicherheitsdichtung vorhanden ist, um Verluste infolge der Verwendung der Sicherheitsdichtung möglichst gering zu halten. Im Schadensfall der Gleitringdichtung, wenn das abzudichtende Medium bis zur Sicherheitsdichtung reicht, erhöht sich dann ein Druck auf den axial vorstehenden Dichtbereich der Sicherheitsdichtung, so dass die Lippen, welche aus dem gleichen Material wie die restliche Sicherheitsdichtung sind und einstückig am Dichtbereich vorgesehen sind und einstückig am Dichtbereich vorgesehen sind, verbogen werden, so dass eine gute Abdichtung zwischen der Sicherheitsdichtung und dem rotierenden Bauteil möglich ist. Die von der Dichtfläche vorstehenden Lippen sind vorzugsweise in Radialrichtung gleich lang und weiter bevorzugt in Umfangsrichtung umlaufend geschlossen.

Vorzugsweise sind die Lippen nur am Dichtbereich der Sicherheitsdichtung angeordnet. Alternativ sind die Lippen sowohl am Dichtbereich als auch teilweise oder vollständig am Grundkörper vorgesehen. Durch das Vorsehen nur am Dichtbereich ist es jedoch möglich, dass bei einem Ausfall der Gleitringdichtung ein enges Anliegen der sich flexibel verformenden Lippen am Außenumfang des rotierenden Bauteils möglich wird und da keine Lippen am Grundkörper vorgesehen sind, eine zu hohe Reibung und damit zu hohe Wärmeentwicklung vermieden wird.

Weiter bevorzugt ist ein Außenumfang des Dichtbereichs in Axialrichtung zylindrisch vorgesehen. Hierdurch kann eine besonders kostengünstige Herstellbarkeit erreicht werden.

Gemäß einer alternativen Ausgestaltung der Erfindung ist ein Außenumfang des Dichtbereichs in Axialrichtung sich verjüngend zu einem freien Ende des Dichtbereichs vorgesehen. Hierdurch kann ein Dichtbereich bereitgestellt werden, welcher ausgehend vom freien Ende des Dichtbereichs in Richtung zum Grundkörper eine immer größere Steifigkeit aufgrund des zunehmenden Außendurchmessers aufweist.

Der sich verjüngende Außenumfang des Dichtbereichs ist vorzugsweise in Axialrichtung entlang des gesamten Dichtbereichs vorgesehen.

Gemäß einer weiteren bevorzugten Ausgestaltung der Erfindung weist der Dichtbereich ausgehend von einer ersten Lippe, welche am nächsten zu einem freien Ende des Dichtbereichs liegt, einen lippenfreien Überstand auf. Der lippenfreie Überstand ist dabei druckentlastet, da der Druck auf einem Außenumfang und einem Innenumfang sowie an der Stirnseite des freien Endes jeweils gleich ist.

Vorzugsweise ist eine Länge L3 des lippenfreien Überstands in Axialrichtung ungefähr ein Drittel einer Länge L2 des Dichtbereichs in Axialrichtung. Hierdurch kann eine sichere Versteifung des Dichtbereichs ermöglicht werden.

Ferner umfasst die Gleitringdichtungsanordnung ein rotierendes Bauteil, welches mit dem rotierenden Gleitring der Gleitringdichtung verbunden ist. Im rotierenden Bauteil sind dabei Ausnehmungen vorgesehen, welche radial innerhalb des Dichtbereichs angeordnet sind. Mit anderen Worten sind Ausnehmungen an dem rotierenden Bauteil im Bereich der Sicherheitsdichtung vorhanden. Hierdurch wird zwar eine Leckage über die Sicherheitsdichtung von einem Zwischenraum zwischen der Sicherheitsdichtung und der Gleitringdichtung zur Atmosphäre vergrößert, jedoch haben die Aussparungen im rotierenden Bauteil den Vorteil, dass in einem Störfall, d.h., bei einem Ausfall der Gleitringdichtung, eine verbesserte Wärmeabfuhr über die nun abdichtende Sicherheitsdichtung, welche sich enger an das rotierende Bauteil anlegt, möglich ist. Hierdurch werden thermische Schäden der Sicherheitsdichtung vermieden, so dass eine Lebensdauer der Sicherheitsdichtung signifikant vergrößert werden kann. Hierdurch ist sichergestellt, dass die Sicherheitsdichtung bis zum Stillstand des rotierenden Bauteils abdichtet und vermeidet, dass Medium über die Sicherheitsdichtung zur Atmosphäre gelangen kann. Die zwangsweise vorhandene Leckage wird dabei aus Sicherheitsaspekten in Kauf genommen.

Die Ausnehmungen im rotierenden Bauteil sind vorzugsweise in Axialrichtung verlaufende Nuten oder Schlitze. Ein Querschnitt der Nuten ist vorzugsweise rechteckig oder V-förmig. Um eine ausreichende Kühlung im Schadensfall zu ermöglichen, ist eine Länge der Nuten in Axialrichtung größer als eine Länge des Dichtbereichs der Sicherheitsdichtung und insbesondere größer als eine Länge in Axialrichtung der mit Lippen versehenen Dichtfläche der Sicherheitsdichtung.

Besonders bevorzugt umfasst die Gleitringdichtungsanordnung genau eine Gleitringdichtung und genau eine Sicherheitsdichtung. Hierdurch kann eine besonders kompakte, insbesondere in Axialrichtung kompakte, und kostengünstige Gleitringdichtungsanordnung bereitgestellt werden.

Ferner betrifft die vorliegende Erfindung eine Arbeitsmaschine, insbesondere eine Pumpe oder einen Kompressor oder einen Expander.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Gleitringdichtungsanordnung gemäß einem ersten Ausführungsbeispiel der Erfindung,
- Fig. 2: eine vergrößerte Detail-Darstellung einer Sicherheitsdichtung von Fig. 1 im Normalzustand, in welchem die Gleitringdichtung keine Beschädigung aufweist,
- Fig. 3: eine schematische Schnittansicht der Sicherheitsdichtung von Fig. 1 im Störfall, in welchem die Gleitringdichtung beschädigt ist,
- Fig. 4: eine schematische Draufsicht auf ein rotierendes Bauteil mit Nuten, welches radial innerhalb der Sicherheitsdichtung angeordnet ist,
- Fig. 5: eine vergrößerte, schematische Schnittansicht einer Gleitringdichtungsanordnung mit Sicherheitsdichtung gemäß einem zweiten Ausführungsbeispiel der Erfindung,
- Fig. 6: eine vergrößerte, schematische Schnittansicht einer Gleitringdichtungsanordnung mit Sicherheitsdichtung gemäß einem dritten Ausführungsbeispiel der Erfindung, und
- Fig. 7: eine vergrößerte, schematische Schnittansicht einer Gleitringdichtungsanordnung mit Sicherheitsdichtung gemäß einem vierten Ausführungsbeispiel der Erfindung.

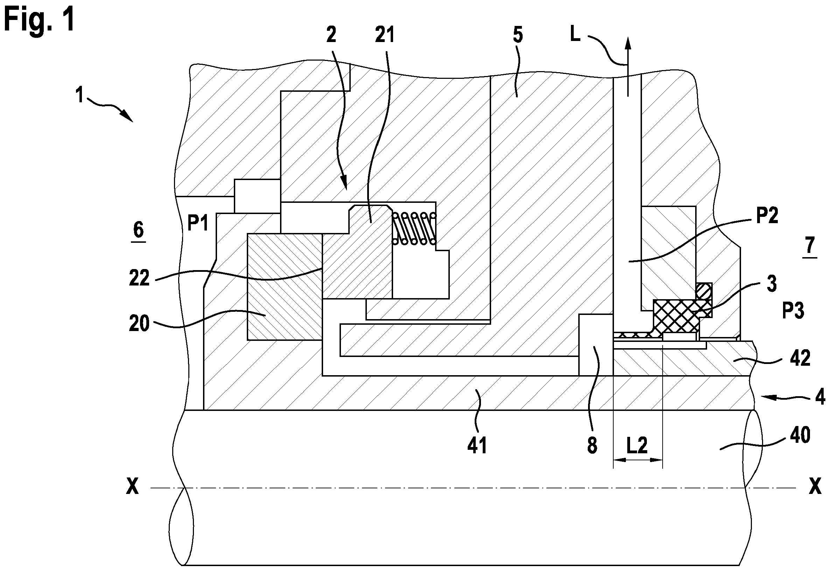

Nachfolgend wird unter Bezugnahme auf die Fig. 1 bis 4 eine Gleitringdichtungsanordnung 1 gemäß einem ersten bevorzugten Ausführungsbeispiel der Erfindung im Detail beschrieben.

Wie aus Fig. 1 ersichtlich ist, umfasst die Gleitringdichtungsanordnung 1 genau eine Gleitringdichtung 2 mit einem rotierenden Gleitring 20 und einem stationären Gleitring 21, welche zwischen sich einen Dichtspalt 22 begrenzen.

Ferner ist ein rotierendes Bauteil 4 vorgesehen, welches in diesem Ausführungsbeispiel eine Welle 40, eine erste Hülse 41 und eine zweite Hülse 42 aufweist. Ein mehrteiliges Gehäuse ist mit dem Bezugszeichen 5 gekennzeichnet.

Die Gleitringdichtungsanordnung 1 dichtet dabei eine Produktseite 6 von einer Atmosphärenseite 7 ab. An der Produktseite 6 herrscht dabei ein Produktdruck P1, welcher um ein Vielfaches größer ist als ein Druck P3 an der Atmosphärenseite. Zwischen der Gleitringdichtung 2 und einer Sicherheitsdichtung 3 ist ferner ein Zwischenbereich 8 vorgesehen, in welchem ein Druck P2 herrscht. Der Druck P2 entspricht dabei ungefähr dem Druck P3 an der Atmosphärenseite 7. Über den Zwischenbereich 8 wird Leckage, welche über den Dichtspalt 22 im normalen Betrieb der Gleitringdichtungsanordnung auftritt, abgeführt, wie durch den Pfeil L angedeutet.

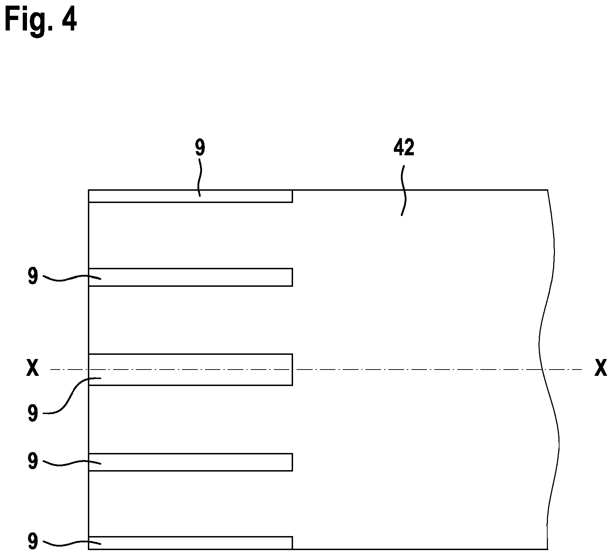

Wie aus Fig. 1 ersichtlich ist, ist die zweite Hülse 42 dabei radial innerhalb der Sicherheitsdichtung 3 angeordnet. Die zweite Hülse 42 ist im Detail in Fig. 4 dargestellt. Wie aus Fig. 4 ersichtlich ist, weist die zweite Hülse 42 eine Vielzahl von Nuten 9 auf, welche geradlinig in Axialrichtung X-X verlaufen. Die Nuten 9 sind dabei gleichmäßig entlang des Umfangs der zweiten Hülse 42 angeordnet. Alle Nuten 9 sind dabei mit geometrisch gleicher Form, insbesondere mit einem viereckigen Querschnitt und gleicher Axiallänge ausgebildet.

Wie aus Fig. 1 ersichtlich ist, sind die Nuten 9 im montierten Zustand der Gleitringdichtungsanordnung dabei radial innerhalb der Sicherheitsdichtung 3 angeordnet. Dabei ist eine Länge der Nuten 9 in Axialrichtung X-X größer als eine Länge L2 des Dichtbereichs der Sicherheitsdichtung 3 in Axialrichtung.

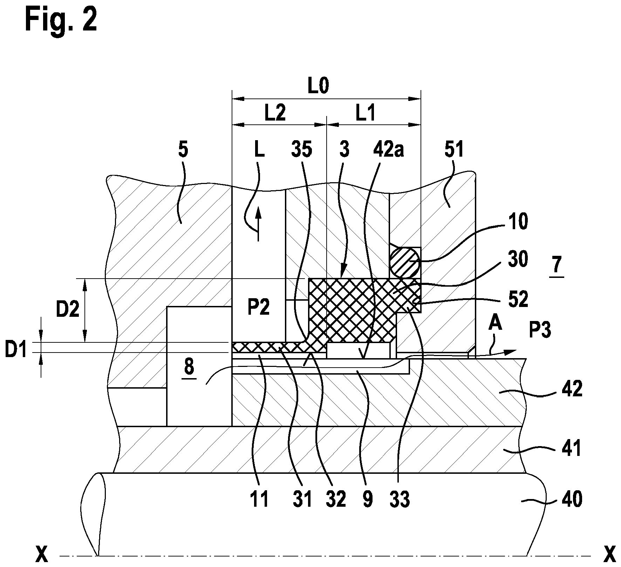

Die Sicherheitsdichtung 3 ist im Detail aus Fig. 2 ersichtlich. Die Sicherheitsdichtung 3 umfasst einen Grundkörper 30 und einen sich in Axialrichtung X-X vom Grundkörper erstreckenden schmalen Dichtbereich 31. Am radial inneren Umfang der Sicherheitsdichtung 3 ist eine Dichtfläche 32 vorgesehen. In diesem Ausführungsbeispiel ist die Dichtfläche eine Zylinderfläche. Die Dichtfläche 32 ist dabei vollständig am Dichtbereich 31 sowie teilweise am Grundkörper 30 gebildet. Der Grundkörper 30 weist ferner noch einen Absatz 33 auf, welcher in einer Ausnehmung 52 in einem Gehäusebauteil 51 ausgebildet ist. Weiterhin ist, wie aus Fig. 2 ersichtlich ist, am äußeren Umfang des Grundkörpers 30 der Sicherheitsdichtung 3 ein O-Ring 10 vorgesehen, um eine Abdichtung am radial äußeren Umfang der Sicherheitsdichtung 3 bereitzustellen.

Eine Dicke D1 des Dichtbereichs 31 ist dabei kleiner als eine Dicke D2 des Grundkörpers 30 (vgl. Fig. 2).

Die Sicherheitsdichtung 3 ist somit einstückig durch den Grundkörper 30 und den dünneren Dichtbereich 31 gebildet. Das Material für die Sicherheitsdichtung 3 ist dabei vorzugsweise ein faserverstärkter, thermoplastischer Kunststoff. Wie in Zusammenschau von Fig. 1 und 2 ersichtlich ist, verläuft der Dichtbereich 31 in Axialrichtung dabei in Richtung zur Gleitringdichtung 2. Eine Länge L2 des Dichtbereichs 31 in Axialrichtung X-X ist dabei gleich wie eine Länge L1 des Grundkörpers 30 in axialer Richtung X-X. Durch den schmalen Dichtbereich 31, welcher in Radialrichtung eine deutlich geringere Dicke als der Grundkörper 30 aufweist, wird somit eine Flexibilität des Dichtbereichs 31 insbesondere in Radialrichtung erhöht. Die Sicherheitsdichtung 3 ist stationär mit dem Gehäusebauteil 51 verbunden und dreht sich somit nicht mit der sich drehenden ersten und zweiten Hülse 41, 42.

Zwischen dem Dichtbereich 31 und dem Grundkörper 30 ist, wie aus Fig. 2 ersichtlich ist, ein bogenförmiger Übergang 35 vorgesehen. Hierdurch wird verhindert, dass bei einer Verformung des Dichtbereichs 31 im Störfall Risse in der Sicherheitsdichtung 3 am Übergang zwischen dem Grundkörper 30 und dem Dichtbereich 31 auftreten können, welche zur Zerstörung der Sicherheitsdichtung 3 führen könnten. Im Normalzustand, d.h., wenn die Gleitringdichtung 2 ohne Probleme arbeitet, ist ein Spalt 11 zwischen einem Außenumfang 42a der zweiten Hülse und der Dichtfläche 32 gebildet (Fig. 2). Der Spalt 11 weist eine radiale Dimension auf, welche sehr klein ist. Somit besteht zwischen dem Zwischenbereich 8 und der Atmosphäre 7 eine Verbindung über den kleinen Spalt 11 sowie die Nuten 9, welche radial innerhalb der Sicherheitsdichtung 3 angeordnet sind. Da ein Druckunterschied im Normalbetrieb zwischen dem Druck P2 im Zwischenbereich 8 und dem Druck P3 an der Atmosphärenseite 7 sehr gering ist, ergibt sich auch nur eine sehr geringe Leckage über den Spalt 11 und die Nuten 9. Diese Leckage ist in Fig. 2 durch den Pfeil A angedeutet. Es sei angemerkt, dass zur besseren Verdeutlichung in den Figuren die Nut 9 sehr groß eingezeichnet ist. Im Normalbetrieb ergibt sich aufgrund des geringen Druckunterschieds von wenigen Pascal nur eine minimale Leckage (Pfeil A) über die Sicherheitsdichtung 3.

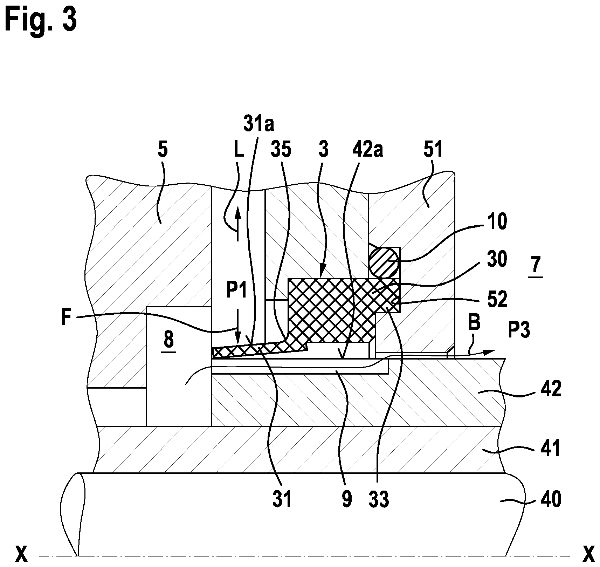

Bei einem Störfall, bei dem die Gleitringdichtung 2 nicht mehr abdichtet, wird automatisch die Sicherheitsdichtung 3 aktiviert. Dieser Zustand ist in Fig. 3 dargestellt. Aufgrund der fehlenden Abdichtung durch die Gleitringdichtung 2 herrscht dann im Zwischenbereich 8 der Produktdruck P1 von der Produktseite. Aufgrund des hohen Drucks ergibt sich sofort mit Druckanstieg im Zwischenbereich 8 eine elastische Verformung des Dichtbereichs 31. Der Produktdruck P1 wirkt auf den äußeren Umfang 31a des Dichtbereichs 31, so dass die elastische Verformung des Dichtbereichs 31 auftritt und der Dichtbereich 31 gegen den Außenumfang 42a der zweiten Hülse 42 gedrückt wird. Somit erfolgt eine Abdichtung am Außenumfang 42a der zweiten Hülse 42, wobei eine Kraft F auf den äußeren Umfang 31a wirkt.

Um im Störfall eine zu starke Temperaturerhöhung der Sicherheitsdichtung 3 zu vermeiden, kann auch im Störfall über die Nuten 9 etwas Produktmedium zur Atmosphärenseite 7 strömen. Dies ist in Fig. 3 durch eine Leckage (Pfeil B) angedeutet. Hierdurch wird jedoch eine Kühlung der Sicherheitsdichtung 3 erreicht, so dass die Sicherheitsdichtung 3 zumindest so lange abdichten kann, bis die Welle 40 und die mit der Welle verbundenen anderen rotierenden Bauteile angehalten sind.

Somit kann automatisch bei einem Störfall der Gleitringdichtung 2 die Sicherheitsdichtung 3 aktiviert werden. Durch das Vorsehen der Nuten 9 kann ein zu schnelles Versagen der Sicherheitsdichtung 3 dabei verhindert werden, indem über eine Strömung durch die Nuten 9 zur Atmosphärenseite 7 eine gewisse Kühlung der Sicherheitsdichtung 3, insbesondere im Bereich des Dichtbereichs 31 erreicht wird. Zwar kann somit über die Nuten 9 etwas Produktmedium zur Atmosphärenseite 7 austreten, jedoch kann verhindert werden, dass eine thermische Beschädigung an der Sicherheitsdichtung 3 erfolgt und ein starkes Ausströmen des Produktmediums zur Atmosphärenseite auftritt.

Es sei angemerkt, dass in normalen Anwendungsfällen ein Druckunterschied zwischen dem Produktdruck P1 und dem Druck P3 an der Atmosphärenseite 7 ungefähr 200 bis 300 x 10⁵ Pa beträgt. Auch bei einem derart hohen Druckunterschied zwischen der Produktseite 6 und der Atmosphärenseite 7 kann die einfach und kostengünstig aufgebaute Sicherheitsdichtung 3 eine Abdichtung bei einer Beschädigung der Gleitringdichtung 2 ermöglichen. Somit kann auf ein redundantes Vorsehen einer zweiten Gleitringdichtung für die Gleitringdichtungsanordnung verzichtet werden. Neben der Einsparung von Kosten ergibt sich hierbei insbesondere auch eine Einsparung von axialem Bauraum, da die Sicherheitsdichtung 3 in Axialrichtung X-X nur sehr kurz baut.

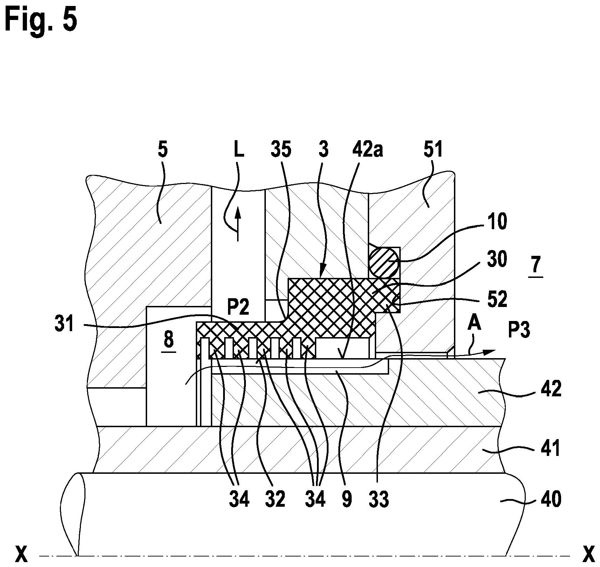

Fig. 5 zeigt eine Gleitringdichtungsanordnung 1 gemäß einem zweiten Ausführungsbeispiel der Erfindung im normalen Betrieb. Das zweite Ausführungsbeispiel entspricht im Wesentlichen dem ersten Ausführungsbeispiel, wobei im Unterschied zum ersten Ausführungsbeispiel beim zweiten Ausführungsbeispiel an der Dichtfläche 32 eine Vielzahl von Lippen 34 ausgebildet ist. In diesem Ausführungsbeispiel sind hierbei fünf Lippen 34 vorgesehen. Die Lippen 34 verlaufen geschlossen in Umfangsrichtung und kontaktieren somit den Außenumfang 42a der zweiten Hülse 42. Hierdurch ist kein Spalt wie im ersten Ausführungsbeispiel zwischen der Sicherheitsdichtung 3 und der zweiten Hülse 42 vorgesehen. Da die Lippen 34 den Außenumfang 42a der zweiten Hülse 42 berühren, ergibt sich im normalen Betrieb eine gewisse Reibung und somit eine gewisse Verlustleistung. Da die Lippen 34 jedoch flexibel sind, kann diese Verlustleistung vernachlässigt werden. Im Störfall, in welchem die Gleitringdichtung 2 eine Beschädigung aufweist, steht am Außenumfang 31a des Dichtbereichs 31, wie im ersten Ausführungsbeispiel, wieder der produktseitige Druck P1 an. Hierdurch verformen sich die Lippen 34, so dass ein enges Anliegen des Dichtbereichs 31 an den Außenumfang 42a der zweiten Hülse auftritt und somit eine Abdichtung mittels der Sicherheitsdichtung 3 an der zweiten Hülse 42 ermöglicht wird. Durch die ebenfalls in der zweiten Hülse 42 vorhandenen Nuten 9 kann während des Störfalls dabei eine Kühlung des Dichtbereichs 31 der Sicherheitsdichtung 3 erreicht werden.

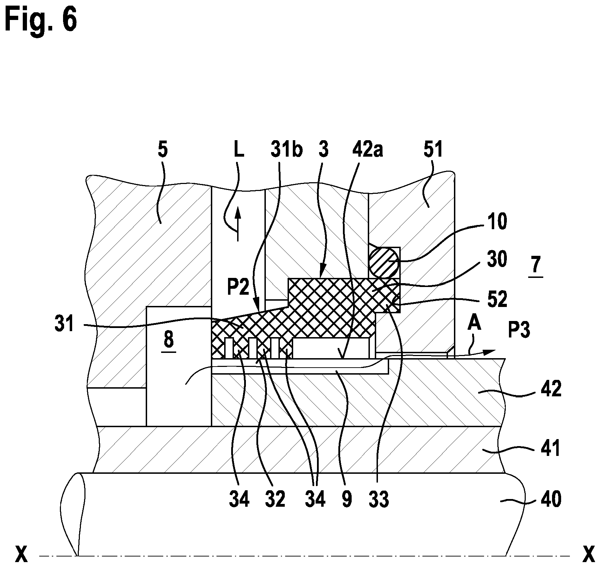

Fig. 6 zeigt eine Gleitringdichtungsanordnung 1 mit einer Sicherheitsdichtung 3 gemäß einem dritten Ausführungsbeispiel der Erfindung im normalen Betrieb. Das dritte Ausführungsbeispiel entspricht im Wesentlichen dem zweiten Ausführungsbeispiel, wobei im Unterschied zum zweiten Ausführungsbeispiel beim dritten Ausführungsbeispiel ein Außenumfang des Dichtbereichs 31 der Sicherheitsdichtung 3 als sich verjüngender Bereich 31b vorgesehen ist. Durch den sich verjüngenden Bereich 31b kann in einem Störfall, in welchem die Gleitringdichtung 2 beschädigt ist, der Druck auf den Außenumfang am sich verjüngenden Bereich 31b des Dichtbereichs 31 mit einer radialen und einer axialen Komponente wirken, so dass eine optimierte Kräfteverteilung am Dichtbereich 31 am Außenumfang 42a der zweiten Hülse 42 sichergestellt ist. Wie im zweiten Ausführungsbeispiel werden die Lippen 34 beim dritten Ausführungsbeispiel im Störfall verformt und ermöglichen ein enges Anliegen des Dichtbereichs 31 an die zweite Hülse 42.

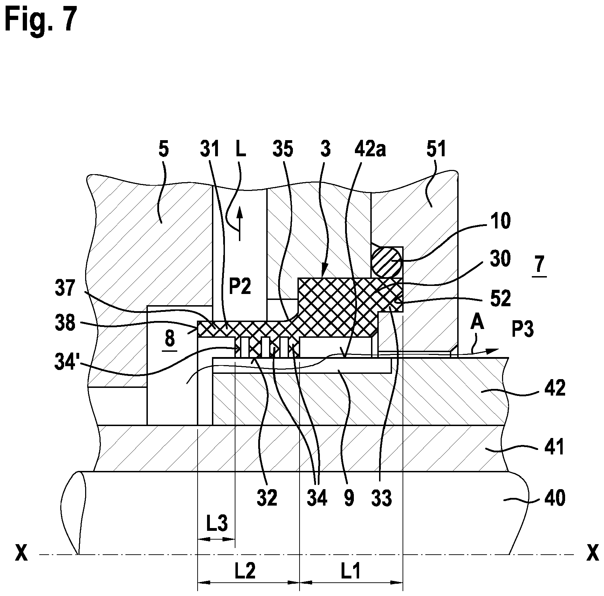

Fig. 7 zeigt eine Gleitringdichtungsanordnung gemäß einem vierten Ausführungsbeispiel der Erfindung im normalen Betrieb. Die Gleitringdichtung des vierten Ausführungsbeispiels entspricht im Wesentlichen der des zweiten Ausführungsbeispiels, wobei im Unterschied zum zweiten Ausführungsbeispiel der Dichtbereich 31 des vierten Ausführungsbeispiels einen lippenfreien Überstand 37 aufweist. Der lippenfreie Überstand 37 steht dabei in Axialrichtung von einer letzten Lippe 34', welche am nächsten zu einem freien Ende 38 des Dichtbereichs 31 liegt, in Axialrichtung vor. Eine Länge L3 des lippenfreien Überstands 37 ist dabei ungefähr 1/3 einer zweiten Länge L2 des Dichtbereichs 31 in Axialrichtung. Eine Länge L1 des Grundkörpers 30 in Axialrichtung X-X ist dabei ungefähr gleich der zweiten Länge L2 des Dichtbereichs 31. Durch das Vorsehen des lippenfreien Überstands 37 ergibt sich am freien Ende 38 des Dichtbereichs 31 ein druckausgeglichener Bereich. Der Druck kann dabei an drei Seiten des lippenfreien Überstands 37 an den Dichtbereich 31 anliegen. Hierdurch ergibt sich eine Versteifung des Dichtbereichs 31. Im Störfall, in welchem die Gleitringdichtung 2 einen Schaden aufweist und der Produktdruck P1 an der Sicherheitsdichtung 3 anliegt, ergibt sich somit ein schnelleres Anlegen des Dichtbereichs 31 der Sicherheitsdichtung 3 an die zweite Hülse 42. Der lippenfreie Überstand 37 unterstützt dabei im Normalzustand ein Anliegen der Lippen 34 am Außenumfang 42a der zweiten Hülse 42.

Zu allen beschriebenen Ausführungsbeispielen sei angemerkt, dass die Nuten 9 optional sind. D.h., wenn das rotierende Bauteil 4 in kurzer Zeit angehalten werden kann, sind die Nuten 9 nicht zwingend notwendig, da dann das Material der Sicherheitsdichtung 3 die dabei entstehende Wärme aufnehmen kann, ohne dass es zu einer Zerstörung der Sicherheitsdichtung 3 kommt.

Es sei ferner angemerkt, dass die Dichtfläche 32 ausschließlich in Axialrichtung am Dichtbereich 31 ausgebildet sein kann oder alternativ auch über die gesamte Länge der Sicherheitsdichtung 3 in Axialrichtung ausgebildet sein kann, d.h., über den Grundkörper und den Dichtbereich 31.

### Bezugszeichenliste

- 1: Gleitringdichtungsanordnung
- 2: Gleitringdichtung
- 3: Sicherheitsdichtung
- 4: rotierendes Bauteil
- 5: Gehäuse
- 6: Produktseite
- 7: Atmosphärenseite
- 8: Zwischenbereich
- 9: Nut
- 10: O-Ring
- 11: Spalt
- 20: rotierender Gleitring
- 21: stationärer Gleitring
- 22: Dichtspalt
- 30: Grundkörper
- 31: Dichtbereich
- 31a: Außenumfang des Dichtbereichs
- 31b: sich verjüngender Bereich am Außenumfang des Dichtbereichs
- 32: Dichtfläche
- 33: Absatz
- 34: Lippen
- 35: bogenförmiger Übergang
- 37: lippenfreier Überstand
- 38: freies Ende des Dichtbereichs
- 40: Welle
- 41: erste Hülse
- 42: zweite Hülse
- 42a: Außenumfang der zweiten Hülse
- 51: Gehäusebauteil
- 52: Ausnehmung
- D1: Dicke des Dichtbereichs
- D2: Dicke des Grundkörpers
- F: Kraft zur Verformung des Dichtbereichs
- Pfeil A: Leckage im Normalzustand über die Sicherheitsdichtung
- Pfeil B: Leckage im Störfall
- Pfeil L: Leckage im Normalzustand
- L0: axiale Gesamtlänge der Sicherheitsdichtung
- L1: axiale Länge des Grundkörpers
- L2: axiale Länge des Dichtbereichs
- L3: axiale Länge des lippenfreien Überstands
- P1: Produktdruck
- P2: Druck im Zwischenbereich
- P3: Atmosphärendruck
- X-X: Axialrichtung

## Patentansprüche

1. Gleitringdichtungsanordnung, umfassend
- eine Gleitringdichtung (2) mit einem rotierenden Gleitring (20) und einem stationären Gleitring (21), welche zwischen sich einen Dichtspalt (22) definieren, und
- eine Sicherheitsdichtung (3), welche als Reservedichtung bei einem Ausfall der Gleitringdichtung (2) vorgesehen ist und eingerichtet ist, an einem rotierenden Bauteil abzudichten,
**dadurch gekennzeichnet, dass**
- die Sicherheitsdichtung (3) einen Grundkörper (30) und einen Dichtbereich (31) aufweist, welcher in Axialrichtung (X-X) vom Grundkörper (30) vorsteht und flexibel ist, und
- die Sicherheitsdichtung (3) stationär angeordnet ist und eine Dichtfläche (32) an einem inneren Umfang aufweist,
- die Sicherheitsdichtung (3) einstückig ausgebildet ist und
- ferner umfassend ein rotierendes Bauteil (4), mit welchem der rotierende Gleitring (20) verbunden ist, wobei im rotierenden Bauteil (4) Ausnehmungen (9) vorgesehen sind, welche radial innerhalb der Sicherheitsdichtung (3) angeordnet sind.

2. Gleitringdichtungsanordnung nach Anspruch 1, wobei eine Dicke (D1) des Dichtbereichs (31) in Radialrichtung kleiner ist als eine Dicke (D2) des Grundkörpers (30) in Radialrichtung.

3. Gleitringdichtungsanordnung nach Anspruch 1 oder 2, wobei der Grundkörper (30) und der Dichtbereich (31) einstückig aus dem gleichen Material hergestellt sind.

4. Gleitringdichtungsanordnung nach einem der vorhergehenden Ansprüche, wobei zwischen dem Grundkörper (30) und dem Dichtbereich (31) an einem Außenumfang ein bogenförmiger Übergang (35) ausgebildet ist.

5. Gleitringdichtungsanordnung nach einem der vorhergehenden Ansprüche, wobei der Dichtbereich (31) in Axialrichtung vom Grundkörper (30) in Richtung zur Gleitringdichtung (2) vorsteht.

6. Gleitringdichtungsanordnung nach einem der vorhergehenden Ansprüche, wobei die Dichtfläche (32) am inneren Umfang des Dichtbereichs (31) zylindrisch ist.

7. Gleitringdichtungsanordnung nach einem der Ansprüche 1 bis 5, wobei die Dichtfläche (32) eine Vielzahl von radial nach Innen vorstehenden Lippen (34) aufweist, wobei die Lippen (34) in Umfangsrichtung umlaufend geschlossen vorgesehen sind.

8. Gleitringdichtungsanordnung nach Anspruch 7, wobei die Lippen (34) ausschließlich am Dichtbereich (31) angeordnet sind.

9. Gleitringdichtungsanordnung nach einem der vorhergehenden Ansprüche, wobei ein Außenumfang des Dichtbereichs (31) in Axialrichtung (X-X) sich verjüngend zu einem freien Ende (38) des Dichtbereichs ausgebildet ist.

10. Gleitringdichtungsanordnung nach einem der Ansprüche 7 bis 9, wobei der Dichtbereich (31) ausgehend von einer ersten Lippe (34'), welche am nächsten zu einem freien Ende (38) des Dichtbereichs (31) liegt, einen lippenfreien Überstand (37) aufweist.

11. Gleitringdichtungsanordnung nach Anspruch 1, wobei die Ausnehmungen (9) in Axialrichtung (X-X) verlaufende Nuten sind.

12. Gleitringdichtungsanordnung nach Anspruch 1 oder 11, wobei eine Länge der Ausnehmungen (9) in Axialrichtung (X-X) größer ist als eine Länge (L2) des Dichtbereichs (31) der Sicherheitsdichtung (3).

13. Gleitringdichtungsanordnung nach einem der vorhergehenden Ansprüche, umfassend genau eine einzige Gleitringdichtung (2).

14. Maschine, insbesondere Pumpe oder Kompressor oder Expander, umfassend eine Gleitringdichtungsanordnung nach einem der vorhergehenden Ansprüche.

## Claims

1. A mechanical seal assembly comprising
a mechanical seal (2) comprising a rotating slide ring (20) and a stationary slide ring (21) defining a sealing gap (22) therebetween, and
a safety seal (3) provided as a redundant seal in the event of failure of the mechanical seal (2) and arranged to seal on a rotating component,
**characterized in that**,
the safety seal (3) comprising a base body (30) and a sealing area (31) projecting from the base body (30) in the axial direction (X-X) and being flexible,
wherein the safety seal (3) is stationary and comprises a sealing surface (32) on an inner circumference,
the safety seal (3) is provided as one-piece, and
further comprising a rotating component (4) to which the rotating slide ring (20) is connected, wherein recesses (9) are provided in the rotating component (4), which recesses are radially arranged inside the safety seal (3).

2. The mechanical seal assembly according to claim 1, wherein a thickness (D1) of the sealing area (31) in the radial direction is smaller than a thickness (D2) of the base body (30) in the radial direction.

3. The mechanical seal assembly according to claim 1 or 2, wherein the base body (30) and the sealing area (31) are integrally formed of the same material.

4. The mechanical seal assembly according to one of the preceding claims, wherein an arc-shaped transition (35) is formed between the base body (30) and the sealing area (31) on an outer circumference.

5. The mechanical seal assembly according to one of the preceding claims, wherein the sealing area (31) projects in the axial direction from the base body (30) in the direction of the mechanical seal (2).

6. The mechanical seal assembly according to one of the preceding claims, wherein the sealing surface (32) at the inner circumference of the sealing area (31) is cylindrical.

7. The mechanical seal assembly according to one of the claims 1 to 5, wherein the sealing surface (32) comprises a plurality of radially inwardly projecting lips (34), the lips (34) being provided in a circumferentially closed manner.

8. The mechanical seal assembly according to claim 7, the lips (34) being arranged exclusively at the sealing area (31).

9. The mechanical seal assembly according to one of the preceding claims, wherein an outer periphery of the sealing area (31) is tapered in axial direction (X-X) to a free end (38) of the sealing region.

10. The mechanical seal assembly according to one of the claims 7 to 9, wherein the seal region (31) comprising a lip-free projection (37) starting from a first lip (34') most proximal to a free end (38) of the seal region (31).

11. The mechanical seal assembly according to claim 1, wherein the recesses (9) are grooves extending in the axial direction (X-X).

12. The mechanical seal assembly according to claim 1 or 11, wherein a length of the recesses (9) in the axial direction (X-X) is greater than a length (L2) of the sealing area (31) of the safety seal (3).

13. The mechanical seal assembly according to one of the preceding claims comprising exactly one single mechanical seal (2).

14. Machine, especially a pump or compressor or expander, comprising a mechanical seal assembly according to one of the preceding claims.

## Revendications

1. Ensemble d'étanchéité à bagues de glissement, comprenant
- un joint d'étanchéité à bagues de glissement (2) avec une bague de glissement rotative (20) et une bague de glissement stationnaire (21), lesquelles définissent entre elles une fente d'étanchéité (22), et
- un joint d'étanchéité de sécurité (3), lequel est prévu en tant que joint d'étanchéité de réserve dans le cas d'une panne du joint d'étanchéité à bagues de glissement (2) et est mis au point pour étanchéifier au niveau d'un composant rotatif,
**caractérisé en ce que**
- le joint d'étanchéité de sécurité (3) présente un corps de base (30) et une zone étanche (31), laquelle fait saillie dans la direction axiale (X-X) du corps de base (30) et est flexible, et
- le joint d'étanchéité de sécurité (3) est disposé de manière stationnaire et présente une surface étanche (32) au niveau d'une périphérie intérieure,
- le joint d'étanchéité de sécurité (3) est réalisé d'un seul tenant, et
- comprenant en outre un composant rotatif (4), auquel la bague de glissement rotative (20) est reliée, dans lequel sont prévus dans le composant rotatif (4) des évidements (9), lesquels sont disposés radialement à l'intérieur du joint d'étanchéité de sécurité (3).

2. Ensemble d'étanchéité à bagues de glissement selon la revendication 1, dans lequel une épaisseur (D1) de la zone étanche (31) est inférieure dans la direction radiale à une épaisseur (D2) du corps de base (30) dans la direction radiale.

3. Ensemble d'étanchéité à bagues de glissement selon la revendication 1 ou 2, dans lequel le corps de base (30) et la zone étanche (31) sont fabriqués d'un seul tenant à partir du même matériau.

4. Ensemble d'étanchéité à bagues de glissement selon l'une quelconque des revendications précédentes, dans lequel un passage (35) en forme d'arc est réalisé entre le corps de base (30) et la zone étanche (31) au niveau d'une périphérie extérieure.

5. Ensemble d'étanchéité à bagues de glissement selon l'une quelconque des revendications précédentes, dans lequel la zone étanche (31) fait saillie dans la direction axiale du corps de base (30) en direction du joint d'étanchéité à bagues de glissement (2).

6. Ensemble d'étanchéité à bagues de glissement selon l'une quelconque des revendications précédentes, dans lequel la surface étanche (32) est cylindrique au niveau de la périphérie intérieure de la zone étanche (31).

7. Ensemble d'étanchéité à bagues de glissement selon l'une quelconque des revendications 1 à 5, dans lequel la surface étanche (32) présente une pluralité de lèvres (34) faisant saillie depuis la zone radiale vers l'intérieur, dans lequel les lèvres (34) sont prévues fermées en périphérie dans la direction périphérique.

8. Ensemble d'étanchéité à bagues de glissement selon la revendication 7, dans lequel les lèvres (34) sont disposées exclusivement au niveau de la zone étanche (31).

9. Ensemble d'étanchéité à bagues de glissement selon l'une quelconque des revendications précédentes, dans lequel une périphérie extérieure de la zone étanche (31) est réalisée de manière à se rétrécir dans la direction axiale (X-X) vers une extrémité libre (38) de la zone étanche.

10. Ensemble d'étanchéité à bagues de glissement selon l'une quelconque des revendications 7 à 9, dans lequel la zone étanche (31) présente en partant d'une première lèvre (34'), laquelle est la plus proche par rapport à une extrémité (38) libre de la zone étanche (31), un débord (37) sans lèvre.

11. Ensemble d'étanchéité à bagues de glissement selon la revendication 1, dans lequel les évidements (9) sont des rainures s'étendant dans la direction axiale (X-X).

12. Ensemble d'étanchéité à bagues de glissement selon la revendication 1 ou 11, dans lequel une longueur des évidements (9) est plus grande dans la direction axiale (X-X) qu'une longueur (L2) de la zone étanche (31) du joint d'étanchéité de sécurité (3).

13. Ensemble d'étanchéité à bagues de glissement selon l'une quelconque des revendications précédentes, comprenant précisément un unique joint d'étanchéité à bagues de glissement (2).

14. Machine, en particulier pompe ou compresseur ou expanseur, comprenant un ensemble d'étanchéité à bagues de glissement selon l'une quelconque des revendications précédentes.
